Europäisches Patentamt

**European Patent Office**

Office européen des brevets

(11) Publication number: **0 202 083**

**A1**

(12) **EUROPEAN PATENT APPLICATION**

(21) Application number: **86303541.6**

(22) Date of filing: **09.05.86**

(51) Int. Cl.⁴: **A 01 D 34/62**

(30) Priority: **09.05.85 GB 8511738**

(43) Date of publication of application:
**20.11.86 Bulletin 86/47**

(84) Designated Contracting States:
**BE DE FR GB LU NL SE**

(71) Applicant: **Birmid Qualcast (Home & Garden Equipment) Limited
Coleridge Street Sunnyhill
Derby DE3 7JT(GB)**

(72) Inventor: **Shawe-Taylor, Arland
Coleridge Street Sunnyhill
Derby, DE3 7JT(GB)**

(72) Inventor: **Burlington, Michael
"Pedlars" Mark Cross
Crowborough East Sussex(GB)**

(74) Representative: **Sanders, Peter Colin Christopher et al,
BROOKES & MARTIN High Holborn House 52/54 High Holborn
London WC1V 6SE(GB)**

(54) **Cylinder lawnmowers.**

(57) A cylinder or reel type lawnmower has a rotatable cutting cylinder (19) cooperating with a bottom blade (29) to perform a shear cutting action. The bottom blade is mounted at each end by means (28, 22) disposed about the cylinder axis (32), the blade being pivoted about an eccentric axis (31) disposed just behind the cylinder axis.

Fig.2.

EP 0 202 083 A1

## CYLINDER LAWNMOWERS

In the design of cylinder or reel type lawnmowers it is important to maintain the integrity between the fixed bottom blade and revolving cutters. A common practice is to ensure that the chassis of the machine is torsionally rigid to minimise the adverse effects of operational loads on this integrity.

This invention relates to a bottom blade and rotating cylinder geometry that eliminates the need for a torsionally rigid chassis. The position of the bottom blade relative to the cylinder is normally adjustable to take account of manufacturing tolerances and wear in use. This is generally achieved by pivoting the bottom blade at one point for movement toward and away from the cylinder, and providing adjusting screws to alter the degree of "on-cut". In this invention the bottom blade is pivoted substantially about the axis of the cylinder. With this geometry any forces generated due to an impact between the cutting mechanism and a solid object are resolved about a common point and no adverse moments are set up that would normally cause unequal displacement between the bottom blade and the cylinder along its length. Additionally, the chassis may twist without significantly affecting the degree of on-cut.

To effect adjustment of the degree of on-cut, a rotatable eccentric device is preferably incorporated into the pivot point. By rotating the eccentric the clearance between the bottom blade and the cylinder can be adjusted. Further restraint is generally required to prevent the bottom blade moving, and this is preferably achieved by a spring mechanism. This may be a linear spring fixed to the body of the machine or a torsional spring fixed close to the pivot. The same spring may be used to provide resilience such that, if the bottom blade and cylinder strike a solid object, the bottom blade is slowly displaced to absorb the impact. By use of the same eccentric as above, or an additional eccentric, a clearance between the bottom blade and cylinder may be established as the bottom blade moves back under impact. This has the advantage of allowing the offending object through the cutting system without causing damage.

One example of a vegetation cutting system embodying the present invention is illustrated in the accompanying drawings in which :

Fig 1 is a front view of a cutting module with its associated drive mechanism

Fig 2 is a sectional view at the left hand end of the system shown in Fig 1

Fig 3 is a sectional view at the right hand end of the system shown in Fig 1, and

Fig 4 is a perspective view of the bottom blade in the cutting system of Figs 1 to 3.

The drawings illustrate a cutting system for a cylinder lawnmower, and only details of the lawnmower necessary for an understanding of the cutting system have been illustrated.

As viewed in the drawings, a left hand drive housing 10 is secured to the body of the mower and supports a motor (not shown) driving a pinion 11. The drive from pinion 11 is transmitted to a pulley 12 by a belt 13. The housing 10 is a metal housing, such as a zinc die casting, but the mower body (not shown) is a lightweight structure which may be formed primarily of plastics materials.

The pulley 12 includes a hub 14 rotatably mounted in a bush 15 retained in a bearing housing 16 secured to, or forming an integral part of, the drive housing 10.

The opposite face of the bush 15 receives a reduced diameter portion 17 of a drive shaft 18 carrying a cutting cylinder 19. This mounting arrangement for the drive shaft 18 is more fully described, and separately claimed, in our UK Patent 2137062B.

An annular ring 20 fits over the reduced diameter portion 17 of shaft 18 to shield the bush 15, the ring 20 being bounded by a shoulder 21 of the bearing housing 16. The small clearance between shoulder 21 and the ring 20 prevents grass clogging the bush 15.

Mounted on the outside of the bearing housing 16 is an eccentric component 22 which permits adjustment of the clearance between the bottom blade and the cutting cylinder. The component 22 has an outer portion 22a concentric with the axis of cylinder 19 and an inner eccentric hub 22b for pivotally mounting a bottom blade 29. A sector 23 of the concentric portion 22a is provided with teeth 24 which mesh with an on-cut adjusting screw 26.

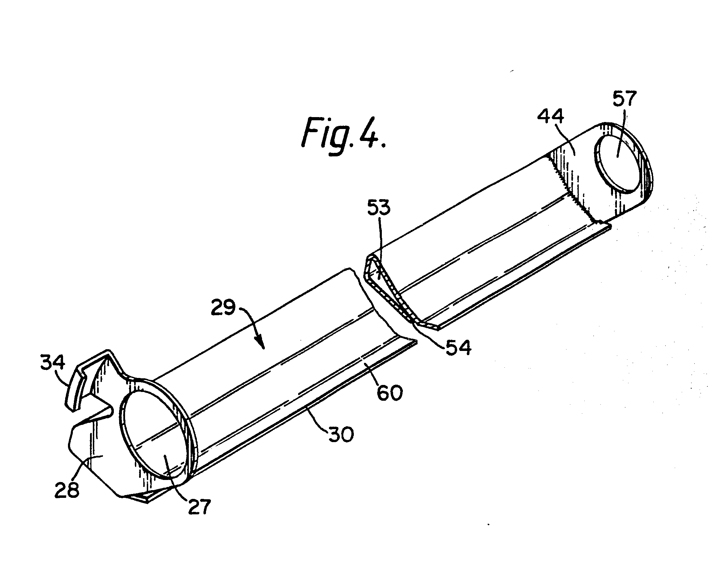

The eccentric hub 22b of component 22 receives a circular opening 27 (Fig. 4) formed in a mounting bracket 28 welded or otherwise secured to the left hand end of bottom blade 29. The bottom blade 29 has a cutting edge 30 which cooperates with the blades of the rotating cylinder 19 to produce a shear cutting action in a conventional manner.

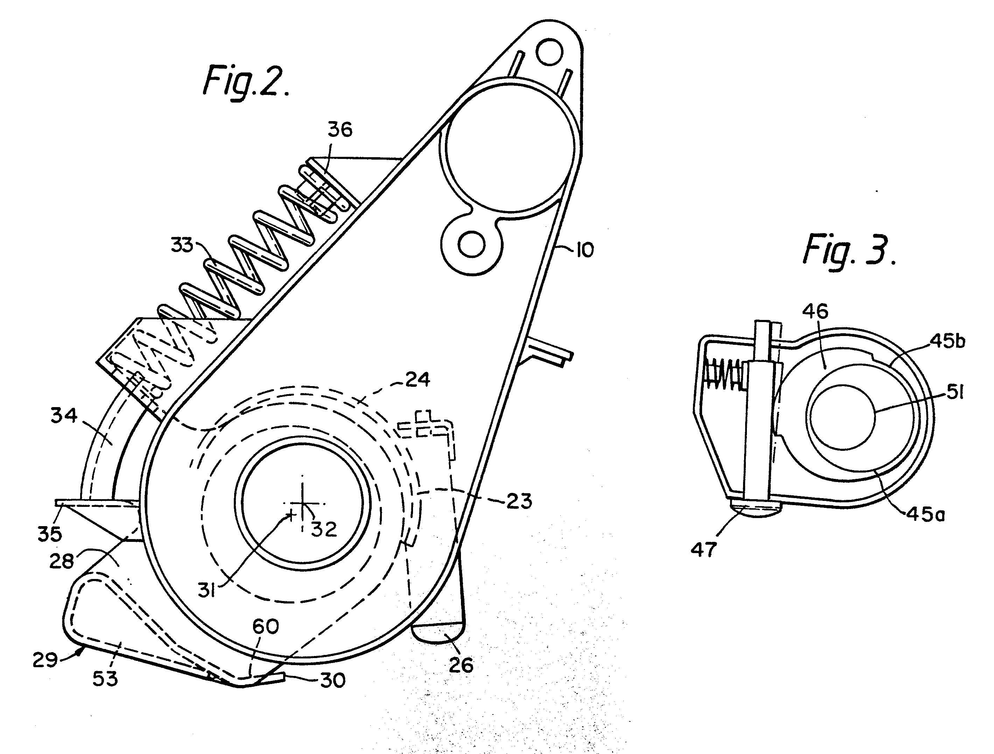

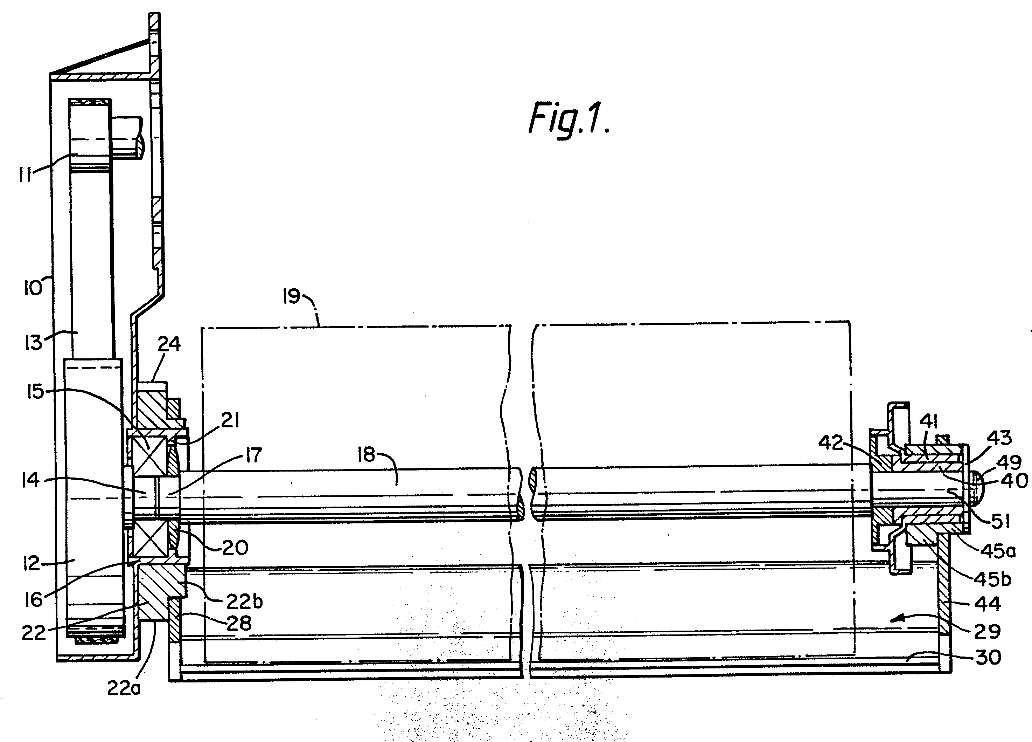

As best shown in Fig 2, the eccentricity of the component 22 is such that the bottom blade 29 is pivoted about an axis 31 disposed behind the axis 32 of the cutting cylinder. In this particular example, the distance between the axis 31 and the axis 32 is about 4 mm. The position of the axis 31 can be adjusted from the position shown in the drawing by rotating the adjusting screw 26 until the axis lies about top dead centre as viewed in Fig 2. This range of adjustment displaces the cutting edge 30 of the bottom blade relative to the rotating cylinder by an amount equal to the eccentricity and is used to compensate for wear of the blades. When correctly adjusted in the on-cut position, the clearance between the bottom blade and the cutting cylinder should be extremely small, for example 0.1 mm.

To cushion the impact with a solid obstacle, the bottom blade 29 is able to swing about the axis 31 against the bias of a preloaded compression spring 33 which urges a tab 34 projecting from the bracket 28 against an end stop 35 secured to the housing 10. The preloading of spring 33 is selected to retain the blade 29 in its on-cut position during normal mowing, the spring being further compressed only when the blade hits a solid obstacle. Spring 33 is retained within a housing 36 also secured to the main housing 10.

At the right hand end of the cutting cylinder, the drive shaft 18 rotates in a bronze bush 40 retained in a bearing housing 41, the bush and the housing being retained on the end of the shaft by a washer 43 and a screw 49 which engages a threaded bore in the reduced diameter end portion 51 of the shaft 18. The bush 40 is protected from grass and other debris by an annular shield ring 42.

The arrangement at this right hand side for mounting the bottom blade 29 is similar to that described for the left hand side of the cylinder but the stiffness of the bottom blade makes it unnecessary to retain the blade against an end stop at both sides.

The desired stiffness of the blade 29 is achieved by forming a strip of sheet metal into a closed loop section 53 with a projecting lip 60 incorporating the cutting edge 30, the underlying edge 54 being welded to the overlying portion of the strip to provide the closed loop section. One advantage of this blade structure is that the required torsional rigidity or stiffness is achieved while keeping the inertia of the blade to a minimum. This further reduces the risk of damage should the blade strike a solid obstacle. To provide additional support for the lip 60, the underlying portion of the strip can be extended beneath the lip so that the edge 54 lies immediately behind the cutting edge 30. In this case a seam weld is provided across the full width of the lip.

The right hand end of the blade 29 is secured to a bracket 44 having an aperture 57 for receiving an eccentric hub 45a of a component 45 mounted on the bearing housing 41. The component 45 also includes a concentric portion 45b with a toothed sector 46 (Fig 3) meshing with an on-cut adjustment screw 47.

Accordingly the above-described adjustment system uses a single eccentric component at each end of the cylinder, the set position of the bottom blade relative to the cutting cylinder being adjusted by rotating the respective adjusting screws 26, 47. In this example, only a nominal clearance (less than 0.5 mm) opens between the cylinder and the bottom blade during swing back against the bias of spring 33, the range of swing back being 30 degrees. By using an additional eccentric, greater clearances can be achieved.

A particular advantage of the described arrangement is that cutting loads are not carried through the mower body, but pass directly from the bottom blade to the cylinder via the eccentric component 22 and the drive housing 10. Accordingly, the mower body can be made of lightweight plastics material. Moreover any twisting of the bodywork about the cylinder axis will have little effect on the cutting performance, since twisting of the bodywork is equivalent to rotation of the right hand eccentric component 45 (together with the RH bearing housing 41) with respect to the fixed back stop 35 for the bottom blade 29. Accordingly, twisting of the bodywork produces exactly the same effect as rotating the RH eccentric when adjusting the on-cut setting.

Since the bottom blade 29 is pivoted substantially about the axis of the cutting cylinder 19, any forces generated as a result of an impact with a solid obstacle are resolved about a common point and no adverse moments are set up that would normally cause unequal displacement between the bottom blades and the cylinder along its length.

In one alternative embodiment (not illustrated), the bottom blade 29 is detachably secured to the mounting bracket 28. This has the advantage that the bottom blade is then easily removable by shifting it to the right until bracket 44 slips off the eccentric component 45 at the RH end of the cutting cylinder. A replacement blade or an alternative accessory could then be fitted, or the mower could be converted to a scarifier as described, for example, in our UK Patent 2116412B.

In another embodiment (also not illustrated) the eccentric component 45 is engaged with the bottom blade mounting bracket 44 so that they rotate together rather than being rotatable relative to one another. Twisting of the mower bodywork would then produce rotation of the bearing housing 41 but no accompanying rotation of the eccentric component 45. Such an arrangement therefore ensures that the position of the bottom blade relative to the cutting cylinder is unaffected by twisting of the bodywork.

CLAIMS

1.    A cylinder or reel type lawnmower comprising a rotatable cutting cylinder cooperating with a bottom blade to perform a shear cutting action, and characterised in that the bottom blade is mounted at each end by means disposed about the cylinder axis.

2.    A lawnmower according to claim 1 in which the cylinder includes a spindle mounted at each end for rotation in respective bearings, and in which the bottom blade mounting means is located around the outside of the respective bearing housing.

3.    A lawnmower according to claim 1 or claim 2 in which the bottom blade is pivotable against a resilient bias.

4.    A lawnmower according to claim 1 or claim 2 in which the mounting means is rotatable about the cylinder axis, and in which the mounting means includes an eccentric axis offset from the cylinder axis, the bottom blade being retained a fixed distance from the eccentric axis during rotation of the mounting means such that the clearance between the bottom blade and the cutting cylinder is adjusted by rotating the mounting means about the cylinder axis.

5.    A lawnmower according to claim 4 in which the bottom blade is pivotable about the eccentric axis against a resilient bias.

6.    A lawnmower according to claim 2 in which the mounting means comprises a component rotatably mounted on the bearing housing, the component having an eccentric hub and the bottom blade being secured to one end of a bracket having its opposite end mounted on the eccentric hub.

7.   A lawnmower according to claim 1 in which the mounting means includes an eccentric device rotatably mounted on a bearing housing, the housing retaining a bearing which supports one end of a drive shaft for the cutting cylinder.

8.   A lawnmower according to claim 7 further characterised by means mounted on the spindle of the cylinder and bounded by an internal shoulder of the bearing housing for shielding the bearing from cut grass and other debris.

9.   A lawnmower according to claim 8 in which the shielding means comprises an annular ring.

10.   A lawnmower according to any one of the preceding claims further characterised in that the bottom blade is hollow and comprises a strip formed into a closed loop configuration with a projecting lip incorporating the cutting edge.

11.   A cylinder or reel type lawnmower comprising a rotatable cutting cylinder cooperating with a bottom blade, and characterised in that the bottom blade comprises a closed loop section with a projecting lip providing the cutting edge.

12.   A cylinder or reel type lawnmower comprising a rotatable cutting cylinder cooperating with a bottom blade and characterised in that the position of the bottom blade relative to the cutting cylinder is adjusted by rotation of respective eccentric devices incorporated in pivotal mounting assemblies at each end of the blade.

13. A lawnmower according to/claim *claim 11 or* 12 further characterised in that respective mounting brackets are secured to the bottom blade at each end, the blade being retained in its adjusted position by resilient means acting on only one of the said brackets and urging the bracket against an end stop.

14. A cylinder or reel type lawnmower comprising a rotatable cutting cylinder cooperating with a fixed bottom blade, and characterised in that the bottom blade is mounted for pivotal movement substantially about the axis of the cylinder.

Fig.2.

Fig. 3.

1/3

0202083

Fig.1.

*Fig.4.*

European Patent
Office

**EUROPEAN SEARCH REPORT**

**0202083**

Application number

EP   86 30 3541

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 896 442   (FARMER)  * Page 1, lines 78-89; page 2, lines 30-40; page 2, line 104 - page 3, line 15 * | 1-7,12 ,14 | A 01 D   34/62 |
| A | | 13 | |
| X | US-A-1 819 133   (STEGEMAN)  * Page 3, lines 84-113; claim 29; figures 9-11 * | 1,2,4, 7,12 | |
| A | | 6,8,9 | |
| X | GB-A-  565 658   (ROADS)  * Page 3, lines 1-31,69-77 * | 1,3,4 | TECHNICAL FIELDS SEARCHED (Int. Cl.4) |
| X | US-A-1 836 164   (GRATIOT)  * Page 1, lines 78-84; page 2, lines 17-25 * | 1,14 | A 01 D |
| A | GB-A-  520 582   (DEHN)  * Page 2, lines 68-77; figure 3 * | 8,9 | |
| A | GB-A-1 124 028   (TORO)  * Page 2, lines 79-97; figure 4 * | 10 | |
| X | | 11 | |

The present search report has been drawn up for all claims

| Place of search | Date of completion of the search | Examiner |
|---|---|---|
| THE HAGUE | 31-07-1986 | DE  LAMEILLIEURE D. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03.82